# EUROPEAN PATENT SPECIFICATION

(11) **EP 3 220 038 B1**
(45) Date of publication and mention of the grant of the patent: **24.10.2018**
(21) Application number: 16160843.5
(22) Date of filing: 17.03.2016
(51) Int. Cl.: F16M 13/02, G02B 7/00

(54) **METHOD OF BALANCING A LOAD USING A SUPPORT SYSTEM AND SUPPORT SYSTEM**
VERFAHREN ZUM AUSGLEICHEN EINER LAST MITTELS EINES TRAGSYSTEM UND TRAGSYSTEM
PROCÉDÉ D'ÉQUILIBRAGE D'UNE CHARGE À L'AIDE D'UN SYSTÈME DE SUPPORT ET SYSTÈME DE SUPPORT

(43) Date of publication of application: 20.09.2017
(73) Proprietor: Leica Instruments (Singapore) Pte. Ltd., 608924 Singapore (SG)
(72) Inventor: LIAW, Chin Yi, Singapore 601285 (SG); HUANG, Jason, Singapore 533470 (SG)
(74) Representative: Kudlek, Franz Thomas

(56) References cited:
- EP-A2- 1 324 094
- DE-U1- 20 019 106
- JP-U- H02 136 211
- US-A1- 2012 296 159

## Description

### Field of the invention

The present invention essentially relates to a method of balancing a load using a support system for carrying and balancing a load, especially microscopes, and such a support system.

### Background of the Invention

Support systems are typically used for carrying loads. For ease of movement of the load carried by the support system the load should be balanced. Balancing a load can be achieved by using a counter load creating a counter torque that compensates the torque created by the load. This allows for easy movement of the load, in particular changing the height of the load.

Balancing a load can also be achieved by using a spring or the like in order to compensate a force or a torque created by the load. Since support systems can be used for different loads, e.g. by exchanging the load or adding or removing components, balancing has to be repeated with every change in the load.

A support system using a counter load is known from US 6 637 274 B2. This support system uses a balance control system measuring imbalances in the forces and torques that arise and adjusting the counter load. A measuring unit is integrated in a support arm used for carrying the load.

Such a support system, however, has the disadvantage of a bulky system due to the counter load necessary for balancing, although automatic balancing is possible.

Yet other support systems are known from DE20019106 U1 and JPH02136211U. It is an object of the invention to provide a possibility of compact and easy load balancing.

### Disclosure of the Invention

The problem is solved by a method of balancing a load and a support system for carrying and balancing a load according to the independent claims. Advantageous embodiments are the subject matter of the dependent claims as well as of the following description.

### Advantages of the Invention

A method of balancing a load according to the invention uses a support system for carrying and balancing a load including a base and a load carrier adapted to be connected to the load and at least two support arms connecting the base and the load carrier, such that the load carrier is movable in fixed orientation relative to the base. This means that the load does not change its orientation relative to gravity, for example. This kind of carrier is also called a parallelogram carrier since the support arms are usually linear and arranged in parallel. Thus, the load is, for example, movable up and down with fixed orientation.

Further, the support systems includes an extendable and retractable linear actuator connecting the base and spring means, the linear actuator being fixed to the base and the spring means being pivotably connected to the linear actuator in an angle different from 0°C and 180° and to one of the at least two support arms or the load carrier, such that a first torque is exerted by the spring means on said support arm or the load carrier relative to the base. The first torque is thus a torque about an axis of rotation of one of the support arms. This means that a weight force or torque exerted by the load and, if applicable, further components of the support system on the base can be compensated by the spring means.

To achieve balancing the method includes the steps of blocking movement of one of the at least two support arms and determining whether a resulting torque resulting from the first torque and a second torque exceeds a threshold by means of resulting torque determining, the second torque being exerted by the support system and/or the load on the spring means counteracting the first torque. The threshold can be a minimum torque necessary for overcoming friction, for example. In other words, it can be determined whether one of the support arms or the load moves. A further step comprises actuating the linear actuator if a resulting torque exceeds the threshold in order to reduce the resulting torque. The second torque is thus also a torque about an axis of rotation of one of the support arms.

Since the spring means are connected to the linear actuator in an angle different from 0° and 180° the spring means can exert a torque on the load. Further, upon actuating, i.e. extending or retracting, the linear actuator will change the angle between the linear actuator and the spring means. Thus, the torque can be changed by actuating the linear actuator. Further, such an automatic determination allows for automatic actuation of the linear actuator if the resulting torque exceeds the threshold, i.e. if the arms and the load move, in order to reduce this resulting torque and thus balancing the load. An advantage of this method is that no torque has to be measured but detection of any resulting torque, i.e. movement of the arms and the load, is sufficient for achieving balancing. Typically, such balance is necessary when the load is changed. In order to execute the mentioned automatic balancing activation by pushing a button or the like is possible.

Preferably, the resulting torque determining means are adapted to determine whether one of the at least two support arms or the load carrier is displaced to reach or pass a predetermined position relative to the base. The predetermined position can be defined by a position that will be reached or passed by any of the arms or the load if the resulting torque causes a movement of the arms and the load about their rotation axis clockwise or counter clockwise. Using such a predetermined position which can be defined by the relation between the first and the second torque allows easy automatic determination whether the first torque is greater than the second torque in absolute values or vice versa. Possibilities for determining when this predetermined position has been reached or passed are explained below with reference to the support system.

Advantageously, the step of actuating the linear actuator, if the resulting torque exceeds the threshold, in order to reduce the resulting torque includes the step of actuating the linear actuator, after one of the at least two support arms or the load carrier reaches or passes the predetermined position, such that the one of the at least two support arms or the load carrier is displaced away from the predetermined position in a direction reverse to a direction for reaching or passing the predetermined position. A further step comprises actuating the linear actuator, after the one of the at least two support arms or the load carrier is displaced away from the predetermined position, such that the one of the at least two support arms or the load carrier will reach or pass the predetermined position again. A further step comprises actuating the linear actuator, after the one of the at least two support arms or the load carrier reaches or passes the predetermined position again, for a calculated time period in a direction displacing the one of the at least two support arms or the load carrier away from the predetermined position. These steps allow for reaching a balance position easily without measuring any torques.

These steps allow for an easy procedure to balance the load automatically. By actuating the linear actuator in order to reach and displace away from the predetermined position the length and/or the time necessary for the linear actuator to reach or displace away from the predetermined position can be determined or measured. Thus, a position near the predetermined position which will be of low deviation between the torques and thus near an optimum or at least almost optimum balance of the load can be easily found. These steps or this procedure can be executed in an open-loop control sequence and can be implemented in control means, for example.

It is of advantage if the calculated time period corresponds to half a time period, which elapses while actuating the linear actuator in order to reach the predetermined position. This means that, assuming a constant actuation velocity of the linear actuator, the position reached corresponds to zero deviation or at least very little deviation between the torques and thus a very good balance of the load. Another possibility is to use a first order system with a time delay (corresponding to static friction) and a time constant (corresponding to inertia) for calculating the time period. If the optimal time period does not exactly correspond to half the time period, a firmware could compensate for individual systems' transfer function characteristics if deemed necessary.

A support system according to the invention can be used for carrying and balancing a load and includes a base and a load carrier adapted to be connected to the load, at least two support arms connecting the base and the load carrier, such that the load carrier is movable in fixed orientation relative to the base. The support system further includes an extendable and retractable linear actuator connecting the base and spring means, the linear actuator fixed to the base and the spring means being pivotably connected to the linear actuator in an angle different from 0° and 180° and to one of the at least two support arms or the load carrier, such that a first torque is exerted by the spring means on said support arm or the load carrier relative to the base.

Further, resulting torque determining means for detecting whether a resulting torque resulting from the first torque and a second torque exceeds a threshold, the second torque exerted by the support system and/or the load on the spring means counteracting the first torque, and control means arranged to actuate the linear actuator upon detection that a resulting torque difference exceeds the threshold in order to reduce the resulting torque are provided.

Since the spring means are connected to the linear actuator in an angle different from 0° and 180° the spring means can exert a torque onto the load. Further, upon actuating, i.e. extending or retracting, the linear actuator will change the angle between the linear actuator and the spring means. Thus, the torque can be changed by actuation of the linear actuator. Further, such an automatic determination allows automatic actuation of the linear actuator upon a deviation between the first and second torque in order to reduce this deviation, i.e. the resulting torque, and thus balancing the load. Typically, such balancing is necessary if the load is changed. In order to execute this automatic balancing activation by pushing a button or the like can be provided.

Preferably, the support system further includes braking means adapted to enable and block movement of a component of the determining means and/or of one of the at least two support arms relative to the base. Such braking means can fix the load and parts of the resulting torque determining means in a desired position if movement shall be prevented for detecting a resulting torque. Further, the braking means can be used for blocking movement of the load during balancing. Activation of the braking means can be provided by a button to be pushed or the like.

Advantageously, the resulting torque determining means include a sensor for determining, if movement of said support arm is blocked, whether one of the at least two support arms or the load carrier reaches or passes a predetermined position relative to the base in order to determine whether a resulting torque exceeds the threshold. Such a predetermined position can be used to define the relation between the first and the second torque and allows easy automatic determination whether the first torque is greater than the second torque in absolute values or vice versa. The sensor allows easy determination of reaching or passing certain positions by measuring distances, contacts or the like.

It is of advantage if the resulting torque determining means further include, as the component, a lever carrying the sensor or being adapted to interact with the sensor for determining whether one of the at least two support arms or the load carrier reaches or passes the predetermined position relative to the base. If such a lever is fixed to the base by use of the braking means and is thus decoupled from movement of the support arms and the load the lever can be used to define reference positions. If the sensor is carried by the lever the sensor can be used to determine moving of one of the support arms along the sensor, for example. If the lever is used to interact with the sensor, the sensor can be mounted to one of the support arms, for example. Then the sensor moves along the lever and can be used to determine certain positions.

Preferably, the sensor is selected from an electro mechanical sensor, an optical sensor, a capacitive sensor and an inductive sensor. These types of sensor allow for easy determination of positions and easy generation of signals to be transmitted to the control means. It shall be understood that appropriate control means for controlling and reading out the sensor can be necessary.

Advantageously, the braking means are selected from an electro magnetic brake, a pneumatic brake and a hydraulic brake. These types of brakes allow for easy and effective blocking of the movement of one of the support arms. It shall be understood that appropriate control means for controlling for the brake and/or supply means can be necessary, i.e. electricity, air or hydraulic fluid supply can be necessary.

It is of advantage if the braking means are of self-locking type. This means that the braking means can block movement of the support arm in normal state and can enable movement only if activated. The brake and anchor of the breaking means can be mounted to the base and the arm, respectively, or vice versa. This enhances security of the support system since no unexpected movement of the load can occur.

Preferably, the spring means are selected from a mechanical spring, a gas spring and a hydraulic spring. These types of springs allow for easy and effective torque compensation. It shall be understood that appropriate control and/or supply means, i.e. air or hydraulic fluid supply, can be necessary. It is to be noted that the spring means can be of compression-loaded or of tensile-loaded type. The type that has to be chosen depends on the orientation of the spring means in relation to gravity which acts on the load.

Advantageously, the linear actuator is selected from an electro mechanical linear actuator, a pneumatic linear actuator and a hydraulic linear actuator. These types of linear actuators allow for easy and effective automatic actuation and thus change of the torque exerted by the spring means. It shall be understood that appropriate control means for controlling the linear actuator and/or supply means can be necessary, i.e. electricity, air or hydraulic fluid supply can be necessary.

It is of advantage if the base is mounted on a stand or at a ceiling and/or if the support system is used for carrying and balancing a microscope, especially a surgical microscope, as the load. For such applications a balanced system is often needed within a short space of time, for example during surgery, especially neuro surgery. Thus, easy movement is desired which is achieved by balancing the load. For example, for surgery, especially neuro surgery, surgeons will release the brakes and move the microscope to a different position so as to magnify different areas of interest. The ease of moving this microscope (e.g. 15 to 40 kg, depending on accessories attached) is dependent on the balanced condition. There is also safety concern that if the microscope over the patient is not in balanced condition, the load might fall on the patient if the surgeon or operator is not careful to hold the load while releasing the brake.

It is to be noted that the mentioned support system is preferably arranged to execute the mentioned method. In particular, the control means of the support system comprise appropriate control instructions to execute the method.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings:
- Fig. 1: shows a support system according to the invention in a preferred embodiment.
- Fig. 2: shows the support system of Fig. 1 in another view.
- Fig. 3: shows a detail of the support system of Fig. 1.
- Fig. 4: shows a support system according to the invention in a further preferred embodiment.
- Fig. 5: shows a detail of the support system of Fig. 4.

### Embodiment of the Invention

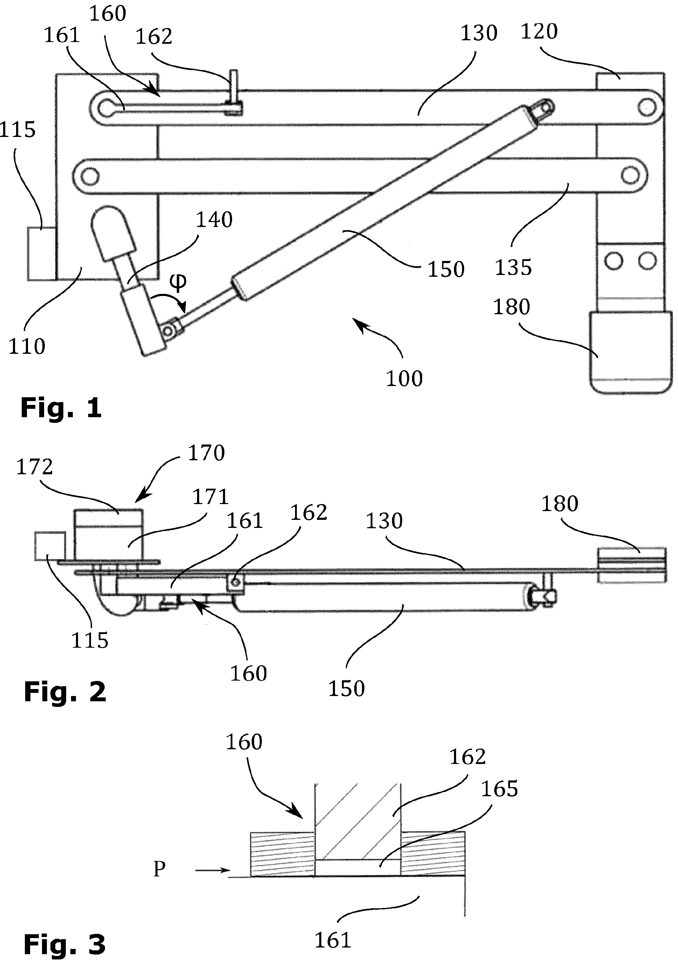

In Fig. 1 a support system 100 according to the invention in a preferred embodiment is illustrated schematically. Support system 100 is adapted to perform a method according to the invention in a preferred embodiment.

Support system 100 includes a base 110 and a load carrier 120, which is adapted to be connected to a load 180. Load 180 can be a microscope, in particular a surgical microscope, for example.

Two support arms 130, 135 are provided connecting base 110 and load carrier 120, such that load carrier 120 is movable in fixed orientation relative to base 110. This kind of arrangement or support system is also called a parallelogram carrier since support arms 130, 135 are typically arranged parallel to each other. As can be seen from the figure load carrier 120 can be moved in parallel to base 110.

Further, it is to be noted that such a support system 100 is typically mounted on a stand via base 110 or mounted to a ceiling, e.g. in an operating room, via base 110. Thus, the load, i.e. the microscope, for example, can be moved in the room while being connected to support system 100.

Further, an extendable and retractable linear actuator 140 is provided connecting base 110 and spring means 150. Linear actuator 140 is fixed to base 110 with a defined angle and spring means 150 are pivotably connected to linear actuator 140 in an angle ϕ different from 0° and 180° and to support arm 130, such that a first torque is exerted by spring means 150 on said support arm 130 relative to base 110. Linear actuator 140 can be of electro mechanical type including an electric motor and a gear box, for example. Spring means 150 can be of mechanical type including an elastic spring moving in a hollow cylinder and exerting a force onto a piston, for example.

Since linear actuator 140 is fixed to base 110 spring means 150 can exert a force or a second torque onto support arm 130 and thus onto load 180. It is to be noted that spring means 150, in the shown case, have to be of the compression-loaded type in order to exert a torque(first torque) counteracting the torque exerted by load 180 through gravity (second torque). Further it is to be noted that also spring means of tensile-loaded type can be used if the spring means are arranged in an appropriate way.

Further, control means 115 are shown for controlling and actuating linear actuator 140. If movement of support arm 130 relative to base 110 is blocked, angle ϕ between linear actuator 140 and spring means 150 is changed by actuating, i.e. extending or retracting, linear actuator 140. Thus, also the angle between spring means 150 and support arm 130 is changed having the effect of changing the first torque exerted by spring means 150 onto support arm 130 and load 180, respectively. In addition to angle changes in order to manipulate torque, the length of the spring also changes and thus also influences the torque. For example, a low spring constant can be used and therefore the angle change has a greater influence than the displacement of spring.

Further, resulting torque determining means 160 are provided for detecting or determining movement of support arm 130. Resulting torque determining means 160 include a sensor 162 and a lever 161 which are explained in more detail referring to Fig. 3 and the corresponding description.

In Fig. 2 support system 100 of Fig. 1 is shown in top view. Additionally to Fig. 1, braking means 170 for blocking or enabling movement of support arm 130 relative to base 110 are shown. Braking means 170 are, for example, of the electro magnetic type and include a brake 171 and an anchor 172. Braking means 170 are of self-locking type and thus movement of support arm 130 relative to base 110 is blocked in normal state and enabled only if activated. This activation can be performed by appropriate control of braking means 170 by control means 115, for example.

Referring to Fig. 3, resulting torque determining means 160 of support system 100 of Fig. 1 are shown. While sensor 162 is mounted to support arm 130, lever 161 is fixed to base 110 via breaking means 170. Although any substantial movement of support arm 130 is blocked by braking means 170, slight movement or bending can occur due to the second torque exerted by load 180 on support arm 130. This movement or bending, however, does not affect lever 161. Thus, if such movement or bending occurs sensor 162 is moved relative to lever 161.

In Fig. 3 the first torque is greater than the second torque, i.e. load 180 is pushed upwards against gravity by the resulting torque. Thus, sensor 162, e.g. an inductive sensor, is pushed away from lever 161 resulting in a gap 165 between sensor 162 and lever 161. If the second torque was greater than the first torque sensor 162 would be pushed towards lever 161 resulting in gap 165 closing. Thus, a predetermined positions P can be defined by position at which sensor 162 switches from open to closed state, and reaching or passing of this predetermined position can be determined using determining means 160. Sensor 162 can be connected to and be read out by control means 115, for example.

Support system 100 allows for performing a method according to the invention in a preferred embodiment. Movement of support arm 130 can be blocked using braking means 170 and in particular by not activating braking means 170. When predetermined position P is reached or passed by sensor 162, for example, linear actuator 140 can be actuated in order to increase the first torque such that the predetermined position P will be left and the sensor 162 switching from closed to open state. After predetermined position P has been left, linear actuator 140 is actuated in order to decrease the first torque, such that predetermined position P will be reached again. After the predetermined position P has been reached again, linear actuator 140 is actuated such that a balanced position is reached.

In order to reach this balanced position a time period elapsing during moving of linear actuator 140 in order to leave the predetermined position P can be measured and afterwards linear actuator 140 can be actuated for half that time period. Assuming a constant actuation velocity a position in the middle of both positions, which have been reached during the actuation procedure, is reached and the load is balanced, if the acceleration is large enough to reach such a velocity. If a systematic delay exists, an electronic compensation can be performed.

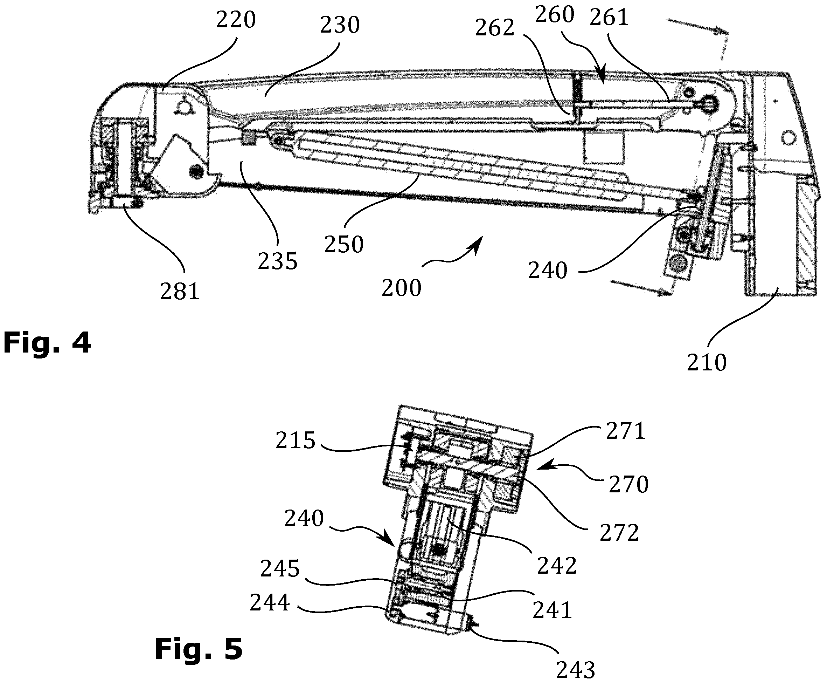

In Fig. 4 a support system 200 according to the invention in a further preferred embodiment is illustrated schematically. Support system 200 is adapted to perform a method according to the invention in a preferred embodiment.

Support system 200 includes a base 210 and a load carrier 220, which is adapted to be connected to a load (not shown) via coupling means 281. Such a load can be a microscope, in particular a surgical microscope, for example.

Two support arms 230, 235 are provided connecting base 210 and load carrier 220, such that load carrier 220 is movable in fixed orientation relative to base 210. This kind of arrangement or support system is also called a parallelogram carrier since support arms 230, 235 are typically arranged parallel two each other. As can be seen from the figure load carrier 220 can be moved while maintaining load orientation relative to base 210.

Further, it is to be noted that such a support system is typically mounted on a stand via base 210 or mounted to a ceiling, e.g. in an operating room, via base 210. Thus, the load, i.e. the microscope, for example, can be moved in the room while being connected to support system 200.

Further, an extendable and retractable linear actuator 240 is provided connecting base 210 and spring means 250. Linear actuator 240 is fixed to base 210 with a defined angle, and spring means 250 are pivotably connected to linear actuator 240 in an angle different from 0° and 180° and to support arm 230, such that a first torque is exerted by spring means 250 on said support arm 230 relative to base 210. Linear actuator 240 can be of the electro mechanical type including an electric motor and a gear box, for example. Linear actuator 240 is explained in more detail referring to Fig. 5 and the corresponding description. Spring means 250 can be of the mechanical type including a gas spring piston, for example.

Since linear actuator 240 is fixed to base 210 spring means 250 can exert a force or a second torque onto support arm 230 and thus onto the load. It is to be noted that spring means 250, in the shown case, have to be of the compression-loaded type in order to exert a torque (first torque) counteracting the torque exerted by the load through gravity (second torque). Further it is to be noted that also spring means of the tensile-loaded type can be used if the spring means are arranged in an appropriate way.

Further, resulting torque determining means 260 are provided for determining movement of support arm 230. Determining means 260 include a sensor 262 and a lever 260. Sensor 262 can be of capacitive type, for example. For operation of determining means 260 it is referred to Fig. 3 and the corresponding explanation of determining means 160.

In Fig. 5 a detail of support system 200 of Fig. 4 is shown in another view (cf. arrows shown in Fig. 4). Additionally to Fig. 4, braking means 270 for blocking or enabling movement of support arm 230 relative to base 210 are shown. Braking means 270 are, for example, of the electro magnetic type and include a brake 271 and an anchor 272. Braking means 270 are of self-locking type and thus movement of support arm 230 relative to base 210 is blocked in normal state and enabled only if activated. This activation can be performed by appropriate control of braking means 270 by control means 215, for example.

Further, control means 215 are shown for controlling and actuating linear actuator 240. If movement of support arm 230 relative to base 210 is blocked, the angle between linear actuator 240 and spring means 250 is changed by actuating, i.e. extracting or retracting, linear actuator 240. Thus, also the angle between spring means 250 and support arm 230 is changed having the effect of changing the first torque exerted by spring means 250 onto support arm 230 and the load, respectively.

Further, linear actuator 240 is shown in more detail. Linear actuator 240 is the of electro mechanical type and includes an electric motor 243, e.g. a DC motor including a planetary gear, and a gear box 241, e.g. a worm gear, for extracting and retracting a linear shaft 242, e.g. including a lead screw, to which spring means 250 are connected. A pulley 244 and a belt 245 are provided to transfer moment from the electric motor to the gear box and the linear shaft. It is to be noted that the selected electric motor needs to have enough torque to actuate the presumed load range and the gas spring force. In general, larger load and gas spring forces require a higher powered motor for the linear actuation.

Support system 200 allows for performing a method according to the invention in a preferred embodiment as explained referring to the embodiment shown in Figs. 1 to 3, but using resulting torque determining means 260 for determining the predetermined positions instead of resulting torque determining means 160.

## Claims

1. Method of balancing a load using a support system (100, 200) for carrying and balancing a load (180), the support system (100, 200) including
a base (110, 210) and a load carrier (120, 220) adapted to be connected to the load (180),
at least two support arms (130, 135, 230, 235) connecting the base (110, 210) and the load carrier (120, 220), such that the load carrier (120, 220) is movable in fixed orientation relative to the base (110, 210),
an extendable and retractable linear actuator (140, 240) connecting the base (110, 210) and spring means (150, 250), the linear actuator (140, 240) being fixed to the base (110, 210) and the spring means (150, 250) being pivotably connected to the linear actuator (140, 240) in an angle (ϕ) different from 0° and 180° and to one of the at least two support arms (130, 135, 230, 235) or the load carrier (120, 220), such that a first torque is exerted by the spring means (150, 250) on said support arm or the load carrier relative to the base (110, 210),
including the steps of
blocking movement of one of the at least two support arms (130, 135, 230, 235),
determining whether a resulting torque resulting from the first torque and a second torque exceeds a threshold by means of resulting torque determining means (160, 260), the second torque being exerted by the support system (100, 200) and/or the load (180) on the spring means (150, 250) counteracting the first torque, and
actuating the linear actuator (140, 240) if the resulting torque exceeds the threshold in order to reduce the resulting torque.

2. Method of claim 1, wherein the resulting torque determining means (160, 260) are adapted to determine whether one of the at least two support arms (130, 135, 230, 235) or the load carrier (120, 220) moves.

3. Method of claim 1 or 2, wherein the resulting torque determining means (160, 260) are adapted to determine whether one of the at least two support arms (130, 135, 230, 235) or the load carrier (120, 220) is displaced to reach or pass a predetermined position (P) relative to the base (110, 210).

4. Method of claim 3, wherein the step of actuating the linear actuator (140, 240), if the resulting torque exceeds the threshold, in order to reduce the resulting torque includes the steps of
actuating the linear actuator (140, 240), after one of the at least two support arms (130, 135, 230, 235) or the load carrier (120, 220) reaches or passes the predetermined position (P), such that the one of the at least two support arms (130, 135, 230, 235) or the load carrier (120, 220) is displaced away from the predetermined position (P) in a direction reverse to a direction for reaching or passing the predetermined position (P),
actuating the linear actuator (140, 240), after the one of the at least two support arms (130, 135, 230, 235) or the load carrier (120, 220) is dis placed away from the predetermined position (P), such that the one of the at least two support arms (130, 135, 230, 235) or the load carrier (120, 220) will reach or pass the predetermined position (P) again, and
actuating the linear actuator (140, 240), after the one of the at least two support arms (130, 135, 230, 235) or the load carrier (120, 220) reaches or passes the predetermined position (P) again for a calculated time period in a direction displacing the one of the at least two support arms (130, 135, 230, 235) or the load carrier (120, 220) away from the predetermined position (P).

5. Method of claim 4, wherein the calculated time period corresponds to half a time period, which elapses while actuating the linear actuator in order for the one of the at least two support arms or the load carrier to reach the predetermined position (P).

6. Support system (100, 200) for carrying and balancing a load (180), the support system (100, 200) including
a base (110, 201) and a load carrier (120, 220) adapted to be connected to the load (180),
at least two support arms (130, 135, 230, 235) connecting the base and the load carrier, such that the load carrier is movable in fixed orientation relative to the base,
an extendable and retractable linear actuator (140, 240) connecting the base (110, 210) and spring means (150, 250), the linear actuator (140, 240) being fixed to the base (110, 210) and the spring means (150, 250) being pivotably connected to the linear actuator (140, 240) in an angle (ϕ) different from 0° and 180° and to one of the at least two support arms (130, 135, 230, 235) or the load carrier (120, 220), such that a first torque is exerted by the spring means (150, 250) on said support arm or the load carrier relative to the base (110, 210),
**characterized by** resulting torque determining means (160, 260) for detecting whether a resulting torque resulting from the first torque and a second torque exceeds a threshold, the second torque being exerted by the support system (100, 200) and/or the load (180) on the spring means (150, 250) counteracting the first torque, and
control means (115, 215) arranged to actuate the linear actuator (140, 240) upon detection that a resulting torque difference exceeds the threshold in order to reduce the resulting torque.

7. Support system (100, 200) of claim 6, further including braking means (170, 270) adapted to enable and block movement of a component of the resulting torque determining means and/or of one of the at least two support arms (130, 135, 230, 235) relative to the base (110, 210).

8. Support system (100, 200) of claim 7, the resulting torque determining means (160, 260) including a sensor (162, 262) for determining, if movement of said support arm is blocked, whether one of the at least two support arms (130, 135, 230, 235) or the load carrier (120, 220) reaches or passes a predetermined position (P) relative to the base (110, 210) in order to determine whether a resulting torque exceeds the threshold.

9. Support system (100, 200) of claim 8, the resulting torque determining means (160, 260) further including, as the component, a lever (161, 261) carrying the sensor (162, 262) or being adapted to interact with the sensor (162, 262) for determining whether one of the at least two support arms (130, 135, 230, 235) or the load carrier (120, 220) reaches or passes the predetermined position (P) relative to the base (110, 210).

10. Support system (100, 200) of claims 8 or 9, wherein the sensor (162, 262) is selected from an electro mechanical sensor, an optical sensor, a capacitive sensor and an inductive sensor.

11. Support system (100, 200) of any of the claims 7 to 10, wherein the braking means (170, 270) are selected from an electro magnetic brake, a pneumatic brake and a hydraulic brake.

12. Support system (100, 200) of any of the claims 7 to 11, wherein the braking means (170, 270) are of self-locking type.

13. Support system (100, 200) of any of the claims 6 to 12, wherein the spring means (150, 250) are selected from a mechanical spring, a gas spring and a hydraulic spring.

14. Support system (100, 200) of any of the claims 6 to 13, wherein the linear actuator (140, 240) is selected from an electro mechanical linear actuator, a pneumatic linear actuator and a hydraulic linear actuator.

15. Support system (100, 200) of any of the claims 6 to 14, wherein the base (110, 210) is mounted on a stand or at a ceiling and/or wherein the support system (100, 200) is used for carrying and balancing a microscope, especially a surgical microscope, as the load (180).

16. Support system (100, 200) of any of the claims 6 to 15, arranged to execute a method of any of claims 1 to 5.

## Patentansprüche

1. Verfahren zum Ausgleichen einer Last unter Verwendung eines Tragsystems (100, 200), um eine Last (180) zu tragen und auszugleichen, wobei das Tragsystem Folgendes enthält:
eine Basis (110, 210) und einen Lastträger (120, 220), der ausgelegt ist, mit der Last (180) verbunden zu werden,
mindestens zwei Tragarme (130, 135, 230, 235), die die Basis (110, 210) und den Lastträger (120, 220) verbinden, derart, dass der Lastträger (120, 220) in einer festen Orientierung in Bezug auf die Basis (110, 210) beweglich ist, und
einen aus- und einfahrbaren geradlinigen Aktor (140, 240), der die Basis (110, 210) und Federmittel (150, 250) verbindet, wobei der geradlinige Aktor (140, 240) an der Basis (110, 210) befestigt ist und die Federmittel (150, 250) in einem Winkel (ϕ), der von 0° und 180° verschieden ist, mit dem geradlinigen Aktor (140, 240) und mit einem der mindestens zwei Tragarme (130, 135, 230, 235) oder dem Lastträger (120, 220) drehbar verbunden sind, derart, dass ein erstes Drehmoment in Bezug auf die Basis (110, 210) durch die Federmittel (150, 250) auf den Tragarm oder den Lastträger ausgeübt wird,
das die folgenden Schritte umfasst:
Blockieren der Bewegung von einem der mindestens zwei Tragarme (130, 135, 230, 235),
Bestimmen mittels Bestimmungsmitteln (160, 260) für ein entstehendes Drehmoment, ob ein entstehendes Drehmoment, das aus dem ersten Drehmoment und einem zweiten Drehmoment entsteht, einen Schwellenwert überschreitet, wobei das zweite Drehmoment durch das Tragsystem (100, 200) und/oder die Last (180) dem ersten Drehmoment entgegenwirkend auf die Federmittel (150, 250) ausgeübt wird, und
Betätigen des geradlinigen Aktors (140, 240) dann, wenn das entstehende Drehmoment den Schwellenwert überschreitet, um das entstehende Drehmoment zu verringern.

2. Verfahren nach Anspruch 1, wobei die Bestimmungsmittel (160, 260) für ein entstehendes Drehmoment ausgelegt sind, zu bestimmen, ob sich einer der mindestens zwei Tragarme (130, 135, 230, 235) oder der Lastträger (120, 220) bewegt.

3. Verfahren nach Anspruch 1 oder 2, wobei die Bestimmungsmittel (160, 260) für ein entstehendes Drehmoment ausgelegt sind, zu bestimmen, ob einer der mindestens zwei Tragarme (130, 135, 230, 235) oder der Lastträger (120, 220) versetzt wird, um eine vorgegebene Position (P) in Bezug auf die Basis (110, 210) zu erreichen oder zu durchlaufen.

4. Verfahren nach Anspruch 3, wobei der Schritt des Betätigens des geradlinigen Aktors (140, 240), wenn das entstehende Drehmoment den Schwellenwert überschreitet, um das entstehende Drehmoment zu verringern, die folgenden Schritte umfasst:
Betätigen des geradlinigen Aktors (140, 240), nachdem einer der mindestens zwei Tragarme (130, 135, 230, 235) oder der Lastträger (120, 220) die vorgegebene Position (P) erreicht oder durchläuft, derart, dass der eine der mindestens zwei Tragarme (130, 135, 230, 235) oder der Lastträger (120, 220) von der vorgegebenen Position (P) in eine Richtung umgekehrt zu einer Richtung zum Erreichen oder Durchlaufen der vorgegebenen Position (P) weg versetzt wird,
Betätigen des geradlinigen Aktors (140, 240), nachdem der eine der mindestens zwei Tragarme (130, 135, 230, 235) oder der Lastträger (120, 220) von der vorgegebenen Position (P) weg versetzt ist, derart, dass der eine der mindestens zwei Tragarme (130, 135, 230, 235) oder der Lastträger (120, 220) die vorgegebene Position (P) erneut erreicht oder durchläuft, und
Betätigen des geradlinigen Aktors (140, 240), nachdem der eine der mindestens zwei Tragarme (130, 135, 230, 235) oder der Lastträger (120, 220) die vorgegebene Position (P) erneut erreicht oder durchläuft, für einen berechneten Zeitraum in einer Richtung, die den einen der mindestens zwei Tragarme (130, 135, 230, 235) oder den Lastträger (120, 220) weg von der vorgegebenen Position (P) versetzt.

5. Verfahren nach Anspruch 4, wobei der vorgegebene Zeitraum der Hälfte des Zeitraums entspricht, der verstreicht, während der geradlinige Aktor derart betätigt wird, dass der eine der mindestens zwei Tragarme oder der Lastträger die vorgegebene Position (P) erreicht.

6. Tragsystem (100, 200), um eine Last (180) zu tragen und auszugleichen, wobei das Tragsystem Folgendes enthält:
eine Basis (110, 201) und einen Lastträger (120, 220), der ausgelegt ist, mit der Last (180) verbunden zu werden,
mindestens zwei Tragarme (130, 135, 230, 235), die die Basis und den Lastträger verbinden, derart, dass der Lastträger in einer festen Orientierung in Bezug auf die Basis beweglich ist, und
einen aus- und einfahrbaren geradlinigen Aktor (140, 240), der die Basis (110, 210) und Federmittel (150, 250) verbindet, wobei der geradlinige Aktor (140, 240) an der Basis (110, 210) befestigt ist und die Federmittel (150, 250) in einem Winkel (ϕ), der von 0° und 180° verschieden ist, mit dem geradlinigen Aktor (140, 240) und mit einem der mindestens zwei Tragarme (130, 135, 230, 235) oder dem Lastträger (120, 220) drehbar verbunden sind, derart, dass ein erstes Drehmoment in Bezug auf die Basis (110, 210) durch die Federmittel (150, 250) auf den Tragarm oder den Lastträger ausgeübt wird,
**gekennzeichnet durch**
Bestimmungsmittel (160, 260) für ein entstehendes Drehmoment, um zu bestimmen, ob ein entstehendes Drehmoment, das aus dem ersten Drehmoment und einem zweiten Drehmoment entsteht, einen Schwellenwert überschreitet, wobei das zweite Drehmoment durch das Tragsystem (100, 200) und/oder die Last (180) dem ersten Drehmoment entgegenwirkend auf die Federmittel (150, 250) ausgeübt wird, und
Steuermittel (115, 215), die ausgelegt sind, den geradlinigen Aktor (140, 240) nach dem Detektieren, dass eine entstehende Drehmomentdifferenz den Schwellenwert überschreitet, zu betätigen, um das entstehendes Drehmoment zu verringern.

7. Tragsystem (100, 200) nach Anspruch 6, das ferner Bremsmittel (170, 270) enthält, die ausgelegt sind, eine Bewegung von einer Komponente der Bestimmungsmittel für ein entstehendes Drehmoment und/oder von einem der mindestens zwei Tragarme (130, 135, 230, 235) in Bezug auf die Basis (110, 210) zu ermöglichen und zu blockieren.

8. Tragsystem (100, 200) nach Anspruch 7, wobei die Bestimmungsmittel (160, 260) für ein entstehendes Drehmoment einen Sensor (162, 262) enthalten, um zu bestimmen, ob eine Bewegung des Tragarms blockiert ist und ob einer der mindestens zwei Tragarme (130, 135, 230, 235) oder der Lastträger (120, 220) eine vorgegebene Position (P) in Bezug auf die Basis (110, 210) erreicht oder durchläuft, um zu bestimmen, ob ein entstehendes Drehmoment den Schwellenwert überschreitet.

9. Tragsystem (100, 200) nach Anspruch 8, wobei die Bestimmungsmittel (160, 260) für ein entstehendes Drehmoment ferner als die Komponente einen Hebel (161, 261) enthalten, der den Sensor (162, 262) trägt oder ausgelegt ist, mit dem Sensor (162, 262) zu interagieren, um zu bestimmen, ob einer der mindestens zwei Tragarme (130, 135, 230, 235) oder der Lastträger (120, 220) die vorgegebene Position (P) in Bezug auf die Basis (110, 210) erreicht oder durchläuft.

10. Tragsystem (100, 200) nach Anspruch 8 oder 9, wobei der Sensor (162, 262) aus einem elektromechanischen Sensor, einem optischen Sensor, einem kapazitiven Sensor und einem induktiven Sensor gewählt ist.

11. Tragsystem (100, 200) nach einem der Ansprüche 7 bis 10, wobei die Bremsmittel (170, 270) aus einer elektromagnetischen Bremse, einer pneumatischen Bremse und einer hydraulischen Bremse gewählt sind.

12. Tragsystem (100, 200) nach einem der Ansprüche 7 bis 11, wobei die Bremsmittel (170, 270) von einem selbstverriegelnden Typ sind.

13. Tragsystem (100, 200) nach einem der Ansprüche 6 bis 12, wobei die Federmittel (150, 250) aus einer mechanischen Feder, einer Gasfeder und einer hydraulischen Feder gewählt sind.

14. Tragsystem (100, 200) nach einem der Ansprüche 6 bis 13, wobei der geradlinige Aktor (140, 240) aus einem elektromechanischen geradlinigen Aktor, einem pneumatischen geradlinigen Aktor und einem hydraulischen geradlinigen Aktor gewählt ist.

15. Tragsystem (100, 200) nach einem der Ansprüche 6 bis 14, wobei die Basis (110, 210) an einem Ständer oder bei einer Decke montiert ist und/oder das Tragsystem (100, 200) verwendet wird, um ein Mikroskop, insbesondere ein chirurgisches Mikroskop, als die Last (180) zu tragen und auszugleichen.

16. Tragsystem (100, 200) nach einem der Ansprüche 6 bis 15, das ausgelegt ist, ein Verfahren nach einem der Ansprüche 1 bis 5 auszuführen.

## Revendications

1. Procédé d'équilibrage d'une charge utilisant un système de support (100, 200) pour porter et équilibrer une charge (180), le système de support (100, 200) incluant :
une base (110, 210) et un porteur de charge (120, 220) adapté pour être relié à la charge (180),
au moins deux bras de support (130, 135, 230, 235) reliant la base (110, 210) et le porteur de charge (120, 220), de telle sorte que le porteur de charge (120, 220) est mobile dans une orientation fixe par rapport à la base (110, 210), un actionneur linéaire extensible et rétractable (140, 240) reliant la base (110, 210) et des moyens à ressort (150, 250), l'actionneur linéaire (140, 240) étant fixé à la base (110, 210) et les moyens à ressort (150, 250) étant reliés à pivotement à l'actionneur linéaire (140, 240) à un angle (ϕ) différent de 0° et de 180° et à l'un des aux moins deux bras de support (130, 135, 230, 235) ou au porteur de charge (120, 220), de telle sorte qu'un premier couple est exercé par les moyens à ressort (150, 250) sur ledit bras de support ou le porteur de charge par rapport à la base (110, 210),
incluant les étapes consistant à :
bloquer un mouvement de l'un des moins deux bras de support (130, 135, 230, 235),
déterminer si un couple résultant qui résulte du premier couple et d'un second couple dépasse un seuil par l'intermédiaire de moyens de détermination d'un couple résultant (160, 260), le second couple étant exercé par le système de support (100, 200) et/ou la charge (180) sur les moyens à ressort (150, 250) contrecarrant le premier couple, et
actionner l'actionneur linéaire (140, 240) si le couple résultant dépasse le seuil afin de réduire le couple résultant.

2. Procédé selon la revendication 1, dans lequel les moyens de détermination d'un couple résultant (160, 260) sont adaptés pour déterminer si l'un des au moins deux bras de support (130, 135, 230, 235) ou le porteur de charge (120, 220) se déplace.

3. Procédé selon la revendication 1 ou 2, dans lequel les moyens de détermination d'un couple résultant (160, 260) sont adaptés pour déterminer si l'un des moins deux bras de support (130, 135, 230, 235) ou le porteur de charge (120, 220) est déplacé pour atteindre ou franchir une position prédéterminée (P) par rapport à la base (110, 210).

4. Procédé selon la revendication 3, dans lequel l'étape d'actionnement de l'actionneur linéaire (140, 240), si le couple résultant dépasse le seuil, afin de réduire le couple résultant, inclut les étapes consistant à :
actionner l'actionneur linéaire (140, 240), après que l'un des moins deux bras de support (130, 135, 230, 235) ou le porteur de charge (120, 220) atteigne ou franchit la position prédéterminée (P), de telle sorte que l'un des au moins deux bras de support (130, 135, 230, 235) ou le porteur de charge (120, 220) est écarté de la position prédéterminée (P) dans une direction inverse d'une direction pour atteindre ou franchir la position prédéterminée (P),
actionner l'actionneur linéaire (140, 240) après que l'un des au moins deux bras de support (130, 135, 230, 235) ou le porteur de charge (120, 220) est écarté de la position prédéterminée (P), de telle sorte que l'un des au moins deux bras de support (130, 135, 230, 235) ou le porteur de charge (120, 220) atteigne ou franchit de nouveau la position prédéterminée (P), et
actionner l'actionneur linéaire (140, 240) après que l'un des au moins deux bras de support (130, 135, 230, 235) ou le porteur de charge (120, 220) atteigne ou franchit de nouveau la position prédéterminée (P) pendant une période de temps calculée dans une direction déplaçant l'un des au moins deux bras de support (130, 135, 230, 235) ou le porteur de charge (120, 220) en l'éloignant de la position prédéterminée (P).

5. Procédé selon la revendication 4, dans lequel la période de temps calculée correspond à une demie période de temps, qui s'écoule pendant l'actionnement de l'actionneur linéaire afin que l'un des au moins deux bras de support ou le porteur de charge atteigne la position prédéterminée (P) .

6. Système de support (100, 200) pour porter et équilibrer une charge (180), le système de support (100, 200) incluant :
une base (110, 210) et un porteur de charge (120, 220) adaptés pour être reliés à la charge (180),
au moins deux bras de support (130, 135, 230, 235) reliant la base et le porteur de charge, de telle sorte que le porteur de charge est mobile dans une orientation fixe par rapport à la base,
un actionneur linéaire extensible et rétractable (140, 240) reliant la base (110, 210) et des moyens à ressort (150, 250), l'actionneur linéaire (140, 240) étant fixé à la base (110, 210) et les moyens à ressort (150, 250) étant reliés à pivotement à l'actionneur linéaire (140, 240) à un angle (ϕ) différent de 0° et de 180° et à l'un des aux moins deux bras de support (130, 135, 230, 235) ou au porteur de charge (120, 220), de telle sorte qu'un premier couple est exercé par les moyens à ressort (150, 250) sur ledit bras de support ou le porteur de charge par rapport à la base (110, 210),
**caractérisé par** des moyens de détermination d'un couple résultant (160, 260) pour détecter si un couple résultant qui résulte du premier couple et d'un second couple dépasse un seuil, le second couple étant exercé par le système de support (100, 200) et/ou la charge (180) sur les moyens à ressort (150, 250) contrecarrant le premier couple, et
des moyens de commande (115, 215) agencés pour actionner l'actionneur linéaire (140, 240) lors de la détection qu'une différence de couple résultant dépasse le seuil afin de réduire le couple résultant.

7. Système de support (100, 200) selon la revendication 6, incluant en outre des moyens de freinage (170, 270) adaptés pour permettre et bloquer un mouvement d'un composant des moyens de détermination d'un couple résultant et/ou de l'un des au moins deux bras de support (130, 135, 230, 235) par rapport à la base (110, 210).

8. Système de support (100, 200) selon la revendication 7, les moyens de détermination d'un couple résultant (160, 260) incluant un capteur (162, 262) pour déterminer si un mouvement dudit bras de support est bloqué, si l'un des au moins deux bras de support (130, 135, 230, 235) ou le porteur de charge (120, 220) atteint ou franchit une position prédéterminée (P) par rapport à la base (110, 210) afin de déterminer si un couple résultant dépasse le seuil.

9. Système de support (100, 200) selon la revendication 8, les moyens de détermination d'un couple résultant (160, 260) incluant en outre, en tant que composant, un levier (161, 261) supportant le capteur (162, 262) ou étant adapté pour interagir avec le capteur (162, 262) pour déterminer si l'un des au moins deux bras de support (130, 135, 230, 235) ou le porteur de charge (120, 220) atteint ou franchit la position prédéterminée (P) par rapport à la base (110, 210) .

10. Système de support (100, 200) selon la revendication 8 ou 9, dans lequel le capteur (162, 262) est choisi parmi un capteur électromécanique, un capteur optique, un capteur capacitif et un capteur inductif.

11. Système de support (100, 200) selon l'une quelconque des revendications 7 à 10, dans lequel les moyens de freinage (170, 270) sont choisis parmi un frein électromagnétique, un frein pneumatique et un frein hydraulique.

12. Système de support (100, 200) selon l'une quelconque des revendications 7 à 11, dans lequel les moyens de freinage (170, 270) sont du type autobloquant.

13. Système de support (100, 200) selon l'une quelconque des revendications 6 à 12, dans lequel les moyens à ressort (150, 250) sont choisis parmi un ressort mécanique, un ressort à gaz et un ressort hydraulique.

14. Système de support (100, 200) selon l'une quelconque des revendications 6 à 13, dans lequel l'actionneur linéaire (140, 240) est choisi parmi un actionneur linéaire électromécanique, un actionneur linéaire pneumatique et un actionneur linéaire hydraulique.

15. Système de support (100, 200) selon l'une quelconque des revendications 6 à 14, dans lequel la base (110, 210) est montée sur un socle ou sur un plafond et/ou dans lequel le système de support (100, 200) est utilisé pour porter ou équilibrer un microscope, en particulier un microscope chirurgical, en tant que charge (180).

16. Système de support (100, 200) selon l'une quelconque des revendications 6 à 15, conçu pour exécuter un procédé selon l'une quelconque des revendications 1 à 5.
